(19) Europäisches Patentamt

European Patent Office

Office européen des brevets

(11) **EP 0 847 691 B1**

(12) **EUROPEAN PATENT SPECIFICATION**

(45) Date of publication and mention
of the grant of the patent:
**25.09.2002   Bulletin 2002/39**

(51) Int Cl.[7]: **A01N 25/26**

(21) Application number: **97121659.3**

(22) Date of filing: **09.12.1997**

(54) **Granular pesticidal composition**

Pestizide Granulate

Granulés pesticides

(84) Designated Contracting States:
**BE DE DK ES FR GB IT NL**

(30) Priority: **11.12.1996   JP 33069996**

(43) Date of publication of application:
**17.06.1998   Bulletin 1998/25**

(73) Proprietor: **SUMITOMO CHEMICAL COMPANY LIMITED**
**Osaka-shi, Osaka 541-0041 (JP)**

(72) Inventors:
• **Inoue, Masao**
**Toyonaka-shi, Osaka (JP)**
• **Ogawa, Masao**
**Funabashi-shi, Chiba (JP)**
• **Nakamura, Hiroshi**
**Tsuchiura-shi, Ibaraki (JP)**

(74) Representative: **VOSSIUS & PARTNER**
**Siebertstrasse 4**
**81675 München (DE)**

(56) References cited:
**EP-A- 0 200 288**          **WO-A-91/10362**
**US-A- 3 264 088**

• **DATABASE WPI Derwent Publications Ltd., London, GB; AN 77-26294Y XP002060216 SANYO CHEM IND LTD: "Pesticidal compsns. with long lasting effect- obtd. by coating or mixing the pesticide with polyurethane resin" &** JP 52 028 942 A
• **DATABASE WPI Derwent Publications Ltd., London, GB; AN 85-008911 XP002060217 KUMIAI CHEM IND CO LTD: "Coated agricultural granules prepn. involves coating active granules using water-emulsifiable organic isocyanate and nonionic surfactant" &** JP 59 206 302 A

Remarks:
The file contains technical information submitted after the application was filed and not included in this specification

EP 0 847 691 B1

## Description

The present invention relates to manufacturing method for a granular pesticidal composition in which release of a pesticidal active ingredient therein is restrained.

The present invention has been made to give controlled release of the pesticidal active ingredient, and provides a granular pesticidal composition endowed with effect of restraining releace of a pesticidal active ingredient from the granular pesticidal composition and sustained efficacy of the pesticidal active ingredient.

The present invention relates to a manufacturing method for a granular pesticidal composition coated with a thermosetting resin, comprising repeating the operation that a mixture containing 0.05 to 1.5 parts by weight of (1) a combination of polyisocyanate having tri- or higher isocyanate groups and polyol, (2) a combination of polyisocyanate and polyol having tri- or higher hydroxy groups, or (3) a combination of polyisocyanate having tri- or higher isocyanate groups and polyol having tri- or higher hydroxy groups for preparing the polyurethane resin, is added to 100 parts by weight of the pesticidal active ingredient-containing granule to be coated in one time.

Conventionally, methods are known for formulating pesticidal and other granules using a resin component as a binder; see JP-A-58-205536, WO-A-91/10362, JP-A-52-028942, JP-A-59-206 302, EP-A-0 200 288 and US-A-3 264 088.

In the present invention, the pesticidal active ingredient-containing granule to be coated with the polyurethane resin is obtained by making a pesticidally active ingredient to be supported with carrier which is usually used for formulation of a pesticidal active ingredient.

The examples of the pesticidal active ingredient include the following compounds.

(1) $\alpha$-cyano-3-phenoxybenzyl 2-(4-chlorophenyl)-3-methylbutyrate

(2) (S)-$\alpha$-cyano-3-phenoxybenzyl (S)-2-(4-chlorophenyl)-3-methylbutyrate

(3) $\alpha$-cyano-3-phenoxybenzyl 2,2,3,3-tetramethylcyclopropanecarboxylate

(4) 3-phenoxybenzyl 3-(2,2-dichlorovinyl)-2,2-dimethylcyclopropanecarboxylate

(5) 3-phenoxybenzyl chrysanthemate

(6) 3-phenoxybenzyl (1R)-chrysanthemate

(7) $\alpha$-cyano-3-phenoxybenzyl 3-(2,2-dichlorovinyl)-2,2-dimethylcyclopropanecarboxylate

(8) $\alpha$-cyano-3-(4-chlorophenoxy)benzyl 3-(2,2-dichlorovinyl)-2,2-dimethylcyclopropanecarboxylate

(9) $\alpha$-cyano-3-(4-fluorophenoxy)benzyl 3-(2,2-dichlorovinyl)-2,2-dimethylcyclopropanecarboxylate

(10) $\alpha$-cyano-3-phenoxybenzyl chrysanthemate

(11) $\alpha$-cyano-3-phenoxybenzyl (1R)-chrysanthemate

(12) $\alpha$-cyano-3-(4-chlorophenoxy)benzyl 2-(4-chlorophenyl)-3-methylbutyrate

(13) $\alpha$-cyano-3-(4-fluorophenoxy)benzyl 2-(4-chlorophenyl)-3-methylbutyrate

(14) $\alpha$-cyano-3-phenoxybenzyl 2-(4-tert-butylphenyl)-3-methylbutyrate

(15) $\alpha$-cyano-3-phenoxybenzyl 2-(3,4-methylenedioxyphenyl)-3-methylbutyrate [0008]

(16) $\alpha$-cyano-4-fluoro-3-phenoxybenzyl 3-(2,2-dichlorovinyl)-2,2-dimethylcyclopropanecarboxylate

(17) $\alpha$-cyano-3-phenoxybenzyl 2-(2-chloro-4-trifluoromethylanilino)-3-methylbutyrate

(18) $\alpha$-cyano-3-phenoxybenzyl 2-(4-difluoromethoxyphenyl)-3-methylbutyrate

(19) $\alpha$-cyano-3-phenoxybenzyl (S)-2-(4-difluoromethoxyphenyl)-3-methylbutyrate

(20) cyano-(5-phenoxy-2-pyridyl)methyl 3-(2,2-dichlorovinyl)-2,2-dimethylcyclopropanecarboxylate

(21) $\alpha$-cyano-3-phenoxybenzyl 2,2-dimethyl-3-(1,2,2,2-tetrabromoethyl)cyclopropanecarboxylate

(22) $\alpha$-cyano-3-phenoxybenzyl 2,2-dimethyl-3-(1,2-dichloro-2,2-dibromoethyl)cyclopropanecarboxylate

(23) $\alpha$-cyano-3-phenoxybenzyl 1-(4-ethoxyphenyl)-2,2-dichloropropanecarboxylate

(24) $\alpha$-cyano-3-phenoxybenzyl 2,2-dimethyl-3-(2-chloro-2-trifluoromethylvinyl)cyclopropanecarboxylate

(25) 2-(4-ethoxyphenyl)-2-methylpropyl 3-phenoxybenzyl ether

(26) 2-(4-ethoxyphenyl)-3,3,3-trifluoropropyl 3-phenoxybenzyl ether

(27) 2-methyl-3-phenylbenzyl (1R, trans)-2,2-dimethyl-3-(2-chloro-2-trifluoromethylvinyl)cyclopropanecarboxylate

(28) 2,3,5,6-tetrafluorobenzyl (1R, trans)-3-(2,2-dichlorovinyl)-2,2-dimethylcyclopropanecarboxylate

(29) 3,4,5,6-tetrahydrophthalimidemethylchrysanthemate

(30) 3,4,5,6-tetrahydrophthalimidemethyl (1R)-chrysanthemate

(31) 3-allyl-2-methyl-4-oxocyclopent-2-enyl chrysanthemate

(32) 3-allyl-2-methyl-4-oxocyclopent-2-enyl (1R)-chrysanthemate

(33) (S)-2-methyl-4-oxo-3-(2-propinyl)cyclopent-2-enyl (1R)-chrysanthemate

(34) 1-ethynyl-2-methyl-2-pentenyl (1R)-chrysanthemate

(35) 5-benzyl-3-furylmethylchrysanthemate

(36) 5-benzyl-3-furylmethyl (1R)-chrysanthemate

(37) $\alpha$-cycno-3-phenoxybenzyl 3-(2,2-dibromovinyl)-2,2-dimethylcyclopropanecarboxylate

(38) 6-neopentyloxymethyl-2-phenoxypyridine

(39) O,O-dimethyl O-(3-methyl-4-nitrophenyl) phosphorothioate

(40) O,O-dimethyl O-(cyanophenyl) phosphorothioate

(41) S-α-ethoxycarbonylbenzyl O,O-dimethyl phosphorodithioate

(42) O,O-dimethyl O-(2-isopropyl-6-methyl-4-pyrimidinyl) phosphorothioate

(43) O,O-diethyl O-(2-isopropyl-6-methyl-4-pyrimidinyl) phosphorothioate

(44) O,O-dimethyl O-[3-methyl-4-(methylthio)phenyl] phosphorothioate

(45) O-(4-bromo-2,5-dichlorophenyl) O,O-diethyl phosphorothioate

(46) 2-methoxy-4H-1,3,2-benzoxaphosphorine-2-sulfide

(47) O,O-dimethyl O-(2,4,5-trichlorophenyl) phosphorothioate

(48) O,O-dimethyl O-(3,5,6-trichloro-2-pyridyl) phosphorothioate

(49) O,O-diethyl O-(3,5,6-trichloro-2-pyridyl) phosphorothioate

(50) O,O-dimethyl O-(4-bromo-2,5-dichlorophenyl) phosphorothioate

(51) O-(2,4-dichlorophenyl) O-ethyl S-propyl phosphorodithioate

(52) O,O-dimethyl S-(5-methoxy-1,3,4-thiadiazoline-2-on-3-ylmethyl) phosphorodithioate

(53) dimethyl 2,2,2-trichloro-1-hydroxyethyl phosphonate

(54) O-ethyl O-(4-nitrophenyl) benzenephosphonothioate

(55) O,O-dimethyl S-(N-methylcarbamoylmethyl) phosphorodithioate

(56) O,O-dimethyl O-[3-methyl-4-(methylsulfinyl)phenyl] phosphorothioate

(57) O-(2,4-dichlorophenyl) O,O-diethyl phosphorothioate

(58) O-2-diethylamino-6-methylpyrimidine-4-yl O,O-dimethyl phophorothioate

(59) O,O-diethyl O-(5-phenyl-3-isoxazolyl) phosphorothioate

(60) O,O-diethyl O-(3-oxo-2-phenyl-2H-piridazin-6-yl) phosphorothioate

(61) S-2-ethylsulfinyl-1-methylethyl O,O-dimethyl phosphorothioate

(62) O,O-dimethyl S-2-(1-methylcarbamoylethylthio)ethyl phosphorothioate

(63) S-2-ethylthioethyl O,O-dimethyl phosphorodithioate

(64) S-2-isopropylthioethyl O,O-dimethyl phosphorodithioate

(65) 3-diethoxyphosphorylthiomethyl-6-chlorobenzoxazolone

(66) O,O-dimethyl S-phthalimidemethyl phosphorodithioate

(67) S-[5-methoxy-1,3,4-thiadiazole-2(3H)-on-3-ylmethyl] O,O-dimethyl phosphorodithioate

(68) 3-dimethoxyphophinoxyloxy-N-methylisocrotoneamide

(69) 2-chloro-1-(2,4,5-trichlorophenyl)vinyl dimethyl phosphate

(70) 2-chloro-1-(2,4-dichlorophenyl)vinyl dimethyl phosphate

(71) 2-chloro-1-(2,4-dichlorophenyl)vinyl diethyl phosphate

(72) O,O-dipropyl O-[4-(methylthio)phenyl] phosphate

(73) O-(4-cyanophenyl) O-ethyl phenylphosphonothioate

(74) O-(2,4-dichlorophenyl) O-ethyl phenylphosphonothioate

(75) O-2,6-dichloro-p-tolyl O,O-dimethyl phosphorothioate

(76) 2-sec-butylphenyl methylcarbamate

(77) 3-methylphenyl methylcarbamate

(78) 3,4-dimethylphenyl methylcarbamate

(79) 3,4-isopropylphenyl methylcarbamate

(80) 2,3-dihydro-2,2-dimethyl-7-benzofuranyl (dibutylaminothio) methylcarbamate

(81) 1-methylethyl (3-chlorophenyl) carbamate

(82) S-ethyl dipropylthiocarbamate

(83) 3-[(methoxycarbonyl)amino]phenyl (3-methylphenyl)carbamate

(84) S-ethyl azepane-1-carbothioate

(85) S-4-chlorobenzyl diethylthiocarbamate

(86) methyl 1-(butylcarbamoyl) benzimidazole-2-ylcarbamate

(87) S-(1-methyl-1-phenylethyl) 1-piperidinecarbothioate

(88) S-benzyl 1,2-dimethylpropyl (ethyl) thiocarbamate

(89) O-4-tert-butylphenyl 6-methoxy-2-piridyl (methyl) thiocarbamate

(90) O-3-tert-butylphenyl 6-methoxy-2-piridyl (methyl) thiocarbamate

(91) O-(4-chloro-3-ethylphenyl) 6-methoxy-2-piridyl (methyl) thiocarbamate

(92) O-(4-bromo-3-ethylphenyl) 6-methoxy-2-piridyl (methyl) thiocarbamate

(93) O-(4-trifluoromethylphenyl) 6-methoxy-2-piridyl (methyl) thiocarbamate

(94) isopropyl (2E,4E)-11-methoxy-3,7,11-trimethyl-2,4-dodecadienoate

(95) ethyl 2-(4-phenoxyphenoxy) ethylcarbamate

(96) 2-[1-methyl-2-(4-phenoxyphenoxy)ethoxy]piridine

(97) 1-(4-chlorophenyl)-3-(2,6-difluorobenzoyl)urea

(98) 1-[3,5-dichloro-4-(3-chloro-5-trifluoromethyl-2-piridyloxy)phenyl]-3-(2,6-difluorobenzoyl)urea

(99) 1-(3,5-dichloro-2,4-difluorophenyl)-3-(2,6-difluorobenzoyl)urea

(100) 1-[3,5-dichloro-4-(1,1,2,2-tetrafluoroethoxy)phenyl]-3-(2,6-difluorobenzoyl)urea

(101) 1-[4-(2-chloro-4-trifluoromethylphenoxy)-2-fluorophenyl]-3-(2,6-difluorobenzoyl)urea

(102) trans-5-(4-chlorophenyl)-N-cyclohexyl-4-methyl-2-oxo-3-thiazolidinecarboxamide

(103) 2-tert-butyl-5-(4-tert-butylbenzylthio)-4-chloropiridazin-3(2H)-one

(104) tert-butyl (E)-$\alpha$-(1,3-dimethyl-5-phenoxypyrazole-4-ylmethyleneaminooxy)-p-toluate

(105) 3,7,9,13-tetramethyl-5,11-dioxa-2,8,14-trithia-4,7,9,12-tetraazapentadeca-3,12-diene-6,10-dione

(106) 1-(6-chloro-3-piridylmethyl)-N-nitroimidazolidine-2-ylideneamine

(107) (E)-4,5-dihydro-6-methyl-4-(3-pyridylmethyleneamino)-1,2,4-triazin-3(2H)-one

(108) (E)-N-(6-chloro-3-pyridylmethyl)-N-ethyl-N'-methyl-2-nitrovinylidenediamine

(109) 5-ethoxy-3-(trichloromethyl)-1,2,4-thiadiazole

(110) 2,6-dinitro-N,N-dipropyl-4-(trifluoromethyl)aniline

(111) N-(1,1,3-trimethyl-2-oxa-4-indanyl)-5-chloro-1,3-dimethylpyrazole-4-carboxamide

(112) 3'-isopropoxy-2-(trifluoromethyl)benzanilide

(113) 3'-isopropoxy-2-methylbenzanilide

(114) diisopropyl 1,3-dithiolane-2-ylidenemalonate

(115) 1,2,5,6-tetrahydropyrrolo [3,2,1-ij]quinolin-4-one

(116) 3-(2-propenyloxy)-1,2-benzisothiazole 1,1-dioxide

(117) 5-methyl-1,2,4-triazolo[3,4-b]benzothiazole

(118) dimethyl 4,4'-(o-phenylene)bis(3-thioallophanate)

(119) 1-(4-chlorobenzyl)-1-cyclopentyl-3-phenylurea

(120) 6-(3,5-dichloro-4-methylphenyl)-3(2H)-pyridazinone

(121) (Z)-2'-methylacetophenone 4,6-dimethylpirimidine-2-ylhydrazone

(122) 3-(3,5-dichlorophenyl)-N-isopropyl-2,4-dioxoimidazolidine-1-carbozamide

(123) 3-(3,5-dichlorophenyl)-5-methyl-5-vinyl-1,3-oxazolidin-2,4-dione

(124) N-(3,5-dichlorophenyl)-1,2-dimethylcyclopropane-1,2-dicarboxyimide

(125) N-(R)-[1-(4-chlorophenyl)ethyl]-2,2-dichloro-1-ethyl-3t-methyl-lr-cyclopropanecarboxamide

(126) isopropyl 3,4-diethoxyphenylcarbamate

(127) methyl (E)-2-[2-[6-(2-cyanophenoxy)pirimidin-4-yloxy]phenyl]-3-methoxyacrylate

(128) N-[1-(2,4-dichlorophenylethyl)]-2-cyano-3,3-dimethylbutaneamide

(129) manganese ethylenebis (dithiocarbamate)

(130) ethylenebis(dithiocarbamic acid)manganese and zinc

(131) N-(trichloromethylthio)cyclohexa-4-ene-1,2-dicarboxyimide

(132) tetrachloroisophthalonitrile

(133) 1-(4-chlorophenoxy)-3,3-dimethyl-1-(1H-1,2,4-triazol-1-yl)butan-2-one

(134) (E)-1-(2,4-dichlorophenyl)-4,4-dimethyl-2-(1H-1,2,4-triazole-1-yl)-1-penten-3-ol

(135) (E)-1-(4-chlorophenyl)-4,4-dimethyl-2-(1H-1,2,4-triazol-1-yl)-1-pentene-3-ol

(136) (E)-4-chloro-$\alpha,\alpha,\alpha$-trifluoro-N-(1-imidazol-1-yl-2-propoxyethylidene)-o-toluidine

(137) methyl N-(2-methoxyacetyl)-N-(2,6-xylyl)alaninate

(138) 3-chloro-N-(3-chloro-5-trifluoromethyl-2-piridyl)-2,6-dinitro-4-methylaniline

(139) 3',4'-dichloropropioneanilide

(140) 2-chloro-2',6'-diethyl-N-methoxymethylacetoanilide

(141) N-butoxymethyl-2-chloro-2',6'-diethylacetoanilide

(142) 2-chloro-2',6'-dimethyl-N-(3-methoxy-2-thenyl)acetoanilide

(143) 2-chloro-2',6'-diethyl-N-(2-propoxyethyl)acetoanilide

(144) N-(2-cis-buteneoxy)methyl-2-chloro-2',6'-diethylacetoanilide

(145) ethyl N-chloroacetyl-N-(2,6-diethylphenyl)glycinate

(146) 2-bromo-N-($\alpha,\alpha$-dimethylbenzyl)-3,3-dimethylbutaneamide

(147) 1-(1-methyl-1-phenylethyl)-3-p-tolylurea

(148) 1-(2-chlorobenzyl)-3-($\alpha,\alpha$-dimethylbenzyl)urea

(149) 3-(4-chlorophenyl)-1,1-dimethylurea

(150) 3-(3,4-dichlorophenyl)-1,1-dimethylurea

(151) 2',3'-dichloro-4-ethoxymethoxybenzanilide

(152) 2-benzothiazol-2-yloxy-N-methylacetoanilide

(153) 2-(2-naphtyloxy)propioneanilide

(154) 2-(2,4-dichloro-m-tolyloxy)propioneanilide

(155) 4-(2,4-dichlorobenzoyl)-1,3-dimethylpirazol-5-yl toluene-4-sulfonate

(156) 2-[4-(2,4-dichlorobenzoyl)-1,3-dimethylpirazol-5-yloxy]acetophenone

(157) 2-[4-(2,4-dichloro-3-methylbenzoyl)-1,3-dimethylpirazol-5-yloxy]-p-methylacetophenone

(158) 2,4,6-trichlorophenyl 4-nitrophenyl ether

(159) 2,4-dichlorophenyl 3-methoxy-4-nitrophenyl ether

(160) 2,4-dichlorophenyl 3-methoxycarbonyl-4-nitrophenyl ether

(161) 5-tert-butyl-3-(2,4-dichloro-5-isopropoxyphenyl)-1,3,4-oxadiazol-2(3H)-one

(162) 2-amino-3-chloro-1,4-naphthoquinone

(163) methyl 2-[3-(4,6-dimethoxypyrimidin-2-yl)ureidosulfonyl]benzoate

(164) 3-(4,6-dimethoxy-1,3,5-triazin-2-yl)-1-[2-(2-methoxyethoxy)phenylsulfonyl]urea

(165) ethyl 5-[3-(4,6-dimethoxypyrimidin-2-yl)ureidosulfonyl]-1-methylpirazole-4-carboxylate

(166) 3-chloro-2-[4-chloro-2-fluoro-5-(2-propinyloxy)phenyl]-4,5,6,7-tetrahydro-2H-indazole

(167) N-[4-chloro-2-fluoro-5-(1-methyl-2-propinyloxy)phenyl]-3,4,5,6-tetrahydrophthalimide

(168) N-[4-chloro-2-fluoro-5-(pentyloxycarbonylmethoxy)phenyl]-3,4,5,6-tetrahydrophthalimide

(169) 7-fluoro-6-(3,4,5,6-tetrahydrophthalimide)-4-(2-propinyl)-1,4-benzoxazin-3(2H)-one

(170) 3-chloro-2-[7-fluoro-4-(2-propinyl)-3,4-dihydro-1,4-benzoxazin-3(2H)-on-6-yl]-4,5,6,7-tetrahydro-2H-indazole

(171) 1-[2-chloroimidazo[1,2-a]pyridin-3-ylsulfonyl-3-(4,6-dimethoxypyrimidinyl)urea

(172) 3-isopropyl-1H-2,1,3-benzothiadiazin-4(3H)-on-2,2-dioxide

(173) 2-(1-ethoxyiminobutyl)-5-(2-(ethylthio)propyl]-3-hydroxycyclohexa-2-en-1-one

(174) 2-chloro-4-ethylamino-6-isopropylamino-1,3,5-triazine

(175) 2-methylthio-4,6-bis(ethylamino)-1,3,5-triazine

(176) 2-chloro-4,6-bis(ethylamino)-1,3,5-triazine

(177) 2-methylthio-4-ethylamino-6-(1,2-dimethylpropylamino)-1,3,5-triazine

(178) 2-tert-butylimino-3-isopropyl-5-phenyl-1,3,5-thiadiazinan-4-one

(179) 4'-chloro-2'-(α-hydroxybenzyl)isonicotineanilide

(180) 6-(benzylamino)purine

(181) 6-(furfurylamino)purine

(182) 2,4-dinitro-6-sec-butylphenol

(183) N-[2,4-dimethyl-5-[[(trifluoromethyl)sulfonyl]amino]phenyl]acetoamide

(184) 1-(2-chloro-4-pyridyl)-3-phenylurea

(185) S,S-dimethyl 2-(difluoromethyl)-4-(2-methylpropyl)-6-(trifluoromethyl)pyridine-3,5-dicarbothioate

(186) exo-1-methyl-4-(1-methylethyl)-2-(2-methylphenylmethoxy)-7-oxabicyclo[2.2.1]heptane

These pesticidal active ingredients may be used alone or in combination of two or more, and contained in the pesticidal active ingredient-containing granule which is to be coated with the polyurethane resin in an amount usually from 0.1 to 90% by weight, and preferably from 1 to 80% by weight.

In the present invention, the pesticidal active ingredient-containing granule which is to be coated with the polyurethane resin can be obtained by supporting a pesticidal active ingredient by a solid carrier such as an mineral carrier, vegetable carrier, water-soluble carrier, synthetic carrier or the like, and then, a surfactant, water-soluble polymer, solvent, stabilizer, dye stuff, perfume and the like are optionally added.

The pesticidal active ingredient-containing granule generally contains 1 to 97% by weight of the carrier(s) in addition to 0.1 to 90% by weight of the pesticidal active ingredient, and may further contain 0.1 to 40% by weight, preferably 1 to 20% by weight of the surfactant and/or water-soluble polymer, not more than 30% by weight, preferably 0.1 to 20% by weight of the solvent, 0.01 to 10% by weight of the stabilizer, and 0.01 to 5% by weight of the coloring agent and/or perfume, respectively.

To support the pesticidal active ingredient by the carrier, a conventional production method for a pesticidal granule may be used, and usually a granulator is used such as an extrusion granulator, compression granulator, stirring granulator, fluidized bed granulator and the like, and the granulation is generally conducted to obtain a granule having a diameter from 0.1 to 5 mm, preferably from 0.5 to 3 mm.

The examples of the mineral carrier used to obtain the pesticidal active ingredient-containing granule include kaolin minerals such as kaolinite, dickite, nacrite, halocite and the like, serpentinite such as chrysotile, lizardite, anticolite, amecite and the like, smectite such as calcium montmorillonite, magnesium montmorillonite, saponite, hectorite, sauconite, beidellite and the like, mica such as pyrophyllite, talc, siderite, muscovite, phengite, sericite, illite and the like, silica such as cristobalite, quartz and the like, hydrated magnesium silicate such as atapalgite, sepiolite and the like, calcium carbonate such as dolomite and the like, sulfate minerals such as gypsum and the like, zeolite, tuff, vermiculite, laponite, pumice, diatomite, acidic clay, activated clay and the like.

The examples'of the vegetable carrier include cellulose, hull, wheat flour, wood flour, starch, bran, wheat bran, soy bean flour and the like. The examples of the water-soluble carrier include lactose, sucrose, dextrin, sodium chloride, mirabilite, sodium tripolyphosphate, potassium pyrophosphate, sodium hydrogencarbonate, sodium carbonate, potassium carbonate, potassium hydrogencarbonate, maleic acid, citric acid, fumaric acid, malic acid and the like, and the examples of the synthetic carrier include wet silica, dry silica, calcinated product of wet silica, processed starch (ex. Pineflow manufactured by Matsutani Kagaku K.K.) and the like.

The examples of the surfactant include nonionic surfactants such as polyoxyethylene alkyl ether, polyoxyethylene alkylaryl ether, polyoxyethylenelanolin alcohol, polyoxyethylenealkylphenol formalin condensate, polyoxyethylenesorbitan fatty acid ester, polyoxyethyleneglyceryl mono fatty acid ester, polyoxypropylene glycol mono fatty acid ester, polyoxyethylene sorbitol fatty acid ester, polyoxyethylene castor oil derivatives, polyoxyethylene fatty acid ester, higher fatty acid glycerin ester, sorbitan fatty acid ester, sucrose fatty acid ester, polyoxyethylene polyoxypropylene block polymer, polyoxyethylene fatty acid amide, alkylol amide, polyoxyethylenealkylamine and the like; cationic surfactants such as alkylamine hydrochlorides such as dodecylamine hydrochloride and the like, quaternary alkyl ammonium salts such as dodecyltrimethyl ammonium salt, alkyldimethylbenzyl ammonium salt, alkylpyridinium salt, alkylisoquinolynium salt, dialkyl morphonium salt and the like, benzetonium chloride, polyalkylvinyl pyridinium salt and the like; anionic surfactants such as sodium salts of fatty acids such as sodium palmitate and the like, sodium ether carboxylates such as sodium polyoxyethylene lauryl ether carboxylate, amino acid condensate of higher fatty acid such as sodium lauroylsarcosine, sodium N-laurolyl glutamate and the like, higher fatty acid ester sulfonates such as a higher alkylsulfonate, lauric acid ester sulfonate and the like, dialkyl sulfosuccinates such as dioctyl sulfosuccinate and the like, higher fatty acid amide sulfonates such as oleic amide sulfonate and the like, alkyl aryl sulfonates such as sodium dodecylbenzene sulfonate, diisopropylnaphthalene sulfonate and the like, formalin condensate of alkyl aryl sulfonate, salt of higher alcohol sulfuric acid ester such as pentadecane-2-sulfate, polyoxyethylene alkylphosphate such as dipolyoxyethylene dodecyl ether phosphate and the like, styrene-maleic acid; ampholytic surfactants such as N-lauryl alanine, N,N,N-trimethylaminopropionic acid, N,N,N-trihydroxyethylaminopropionic acid, N-hexyl-N,N-dimethylaminoacetic acid, 1-(2-carboxyethyl)pyridinium betaine, lecithin and the like.

The examples of the water-soluble polymer include gum arabic, sodium carboxymethyl cellulose, hydroxypropylmethyl cellulose, methyl cellulose, methylethyl cellulose, hydroxypropyl cellulose, sodium polyacrylate, tragacanth gum, polyvinylpyrrolidone, alginic acid, sodium alginate, polyoxyethylene having a molecular weight of not less than 6000, modified starch and the like. And the examples of the solvent include saturated aliphatic hydrocarbons such as decane, tridecane, tetradecane, hexadecane, octadecane and the like, unsaturated aliphatic hydrocarbons such as 1-undecene, 1-heneicosene and the like, halogenated hydrocarbons such as Cereclor S45 (solvent manufactured by ICI) and the like, ketones such as methyl ethyl ketone, cyclohexanone and the like, alcohols such as ethanol, butanol, octanol and the like, esters such as ethyl acetate, dimethyl phthalate, methyl laurate, ethyl palmitate, octyl acetate, dioctyl succinate, didecyl adipate and the like, alkylbenzenes such as xylene, ethylbenzene, octadecylbenzene, Solvesso (solvent manufactured by Exxon Chemical Corp.), Hisol SAS-296 (solvent manufactured by Nisseki Kagaku K.K.) and the like, alkylnaphthalenes such as dodecylnaphthalene, tridecylnaphthalene, Solvesso 200 (solvent manufactured by Exxon Chemical Corp.) and the like, glycols such as ethylene glycol, diethylene glycol, tetraethylene glycol, polypropylene glycol and the like, glycol ethers such as propylene glycol monomethyl ether, ethylene glycol monoethyl ether and the like, fatty acids such as oleic acid, capric acid, enanthic acid and the like, acid amides such as N,N-dimethylformamide, N,N-diethylformamide and the like, animal and vegetable oils such as olive oil, soybean oil, rape seed oil, castor oil, linseed oil, cotton seed oil, palm oil, avocado oil, shark liver oil and the like, mineral oils such as machine oil and the like, glycerine, glycerine derivatives such as glycerine fatty acid ester and the like.

The examples of the stabilizer include antioxidants such as phenol-based antioxidant, amine-based antioxidant, phorphorus-based antioxidant, sulfur-based antioxidant, and the like, ultraviolet rays absorbers such as benzotriazole-based ultraviolet rays absorber, benzophenone-based ultraviolet rays absorber, benzoate-based ultraviolet rays absorber, cyano acrylate-based ultraviolet rays absorber, salicylic acid-based ultraviolet rays absorber, hindered amine-based ultraviolet rays absorber and the like, epoxydized vegetable oils such as epoxydized soybean oil, epoxydized linseed oil, epoxydized rape seed oil and the like, isopropyl acid phosphate, liquid paraffin and the like. The examples of the dye stuff include rhodamines such as rhodamine B, solar rhodamine and the like, Yellow #4, Magenta #1, Cyan #2 and the like, and the examples of the perfume include esters such as ethyl acetoacetate, methyl anthranilate, isoamyl isovalerate, ethyl enanthate, ethyl cinnamate, isoamyl butyrate and the like, organic acids such as caproic acid, cinnamic acid and the like, alcohols such as cinnamate alcohol, geraniol, citral, decyl alcohol and the like, aldehydes such as vanillin, piperonal, peryl aldehyde and the like, ketones such as maltol, methyl $\beta$-naphthyl ketone and the like, menthols, and the like.

The granular pesticidal composition of the present invention can be obtained by coating a pesticidal active ingredient-containing granule, for example, a conventional pesticidal granule, with a polyurethane resin.

As the concrete coating treatment method, there is usually used a method in which a monomer which can form a polyurethane resin by causing a curing reaction is added to the pesticidal active ingredient-containing granule under heating optionally in the presence of a catalyst to cause the curing reaction for coating.

When coating is conducted with the polyurethane resin, polyisocyanate and polyol are subjected to a curing reaction in the presence of a curing agent such as an organic metal, amine and the like. The examples of the curing agent include organic metals such as dibutyltin diacetate, dibutyltin dichloride, dibutyltin dilaurate, dibutylthio stannate, tin (I) octylate, di-n-octyltin dilaurate, isopropyl titanate, tetrabutyl titanate, oxyisopropyl vanadate, n-propyl zirconate and the like, amines such as triethylenediamine, N-methylmorpholine, N,N-dimethyldidodecylamine, N-dodecylmorpholine, N,N-dimethylcyclohexylamine, N-ethylmorpholine, dimethylethanolamine, N,N-dimethylbenzylamine, 1,8-diazabicyclo[5.4.0]undeca-7-ene, 1,4-diazabicyclo[2.2.2]octane, and the like.

In the present invention, it is convenient to conduct coating with the polyurethane resin as a thermosetting resin in view of easy handling of the monomer, conditions of the curing reaction and the like. In particular, it is preferable that the pesticidal active ingredient-containing granule is coated using a solution obtained by adding catalyst(s) to respective monomers, i.e. a polyisocyanate and polyol and the product is kept at a temperature from 5 to 120°C for 3 to 60 minutes for coating the pesticidal active ingredient-containing granule with a polyurethane resin, in view of handling. In this method, the polyisocyanate and polyol as monomers used for coating may be composed solely of the monomer, or may be a solution or further an aqueous emulsion or organic solvent-based emulsion.

The examples of the polyisocyanate include toluene diisocyanate (TDI), diphenylmethane diisocyanate (MDI), naphthalene diisocyanate, tolidine isocyanate, hexamethylene diisocyanate, isophorone diisocyanate, xylylene diisocyanate, 4,4-methylenebis(cyclohexyl isocyanate), trimethylhexamethylene diisocyanate, 1,3-(isocyanatemethyl)cyclohexane, triphenylmethane triisocyanate, tris(isocyanatephenyl)thiophosphate, and a mixture thereof, and the like.

Further, instead of these polyisocyanate monomers used for coating, modified polyisocyanates and oligomeric polyisocyanates thereof can also be used. The examples of the modified polyisocyanates include adduct modified polyisocyanates, biuret modified polyisocyanates, isocyanurate modified polyisocyanates, block type polyisocyanates, prepolymer type polyisocyanates, dimerized polyisocyanates and the like.

The examples of the polyol include condensated polyester polyols, polyether polyols, polyacrylic acid polyols, lactone-based polyester polyols, polycarbonate polyols, natural polyols and modified compounds thereof, and the like. The condensated polyester polyol can usually be obtained by condensation reaction of a polyol with a dibasic acid. The polyether polyol can usually be obtained by polymerization reaction of a cyclic oxide. The polyacrylic acid polyol can usually be obtained by condensation reaction of a polyacrylic acid with a polyol, or by polymerization reaction of an acrylate monomer obtained by condensation reaction of acrylic acid with a polyol. The lactone-based polyester polyol can be obtained, for example, by ring-opening polymerization of ε-caprolactam using a polyhydric alcohol as an initiator. The polycarbonate polyol can usually be obtained by reaction of a glycol with a carbonate. The examples of the polyol used to obtain a condensated polyester polyol and polyacrylic acid polyol usually include methylene glycol, ethylene glycol, propylene glycol, tetramethylene glycol, hexamethylene glycol, trimethylolpropane, polytetramethylene glycol, glycerin, pentaerythritol, sorbitol, sucrose and oligomers thereof, and the like. As the dibasic acid used to obtain a condensated polyester polyol, adipic acid, phthalic acid or the like are usually used. Further, the above-described acrylic acid may be substituted by methacrylic acid.

In producing the granular pesticidal composition of the present invention, the method for coating the pesticidal active ingredient-containing granule with a thermosetting resin is as follows.

First, the pesticidal active ingredient-containing granule is mixed by a mixer such as a rolling pan, rolling drum and the like (preferably equipped with a heating apparatus). A monomer for thermosetting resin , or a solution, suspension, emulsion or the like thereof are added into the mixer under heating by dropping, spraying or the like.

This operation is repeated for several times (preferably 2 to 200 times). In particular, in the case wherein controlled release of the pesticidal active ingredient for a long term is required, it is necessary to increase the proportion of the thermosetting resin against the pesticidal active ingredient-containing granule. In this case, however, if a lot of monomer for thermosetting resin is added in one time to the pesticidal active ingredient-containing granule which is being rolled, an uncured thermosetting resin composition tends to have stringiness and the pesticidal active ingredient-containing granule tends to become a aggromerate. Therefore, the operation that the monomer for thermosetting resin is added bit by bit, preferably added so that the proportion of the thermosetting resin is from 0.05 to 1.5 parts by weight in one time based on 100 parts by weight of the pesticidal active ingredient-containing granule to be coated is repeated several times, and the pesticidal active ingredient-containing granule is coated with the thermosetting resin by keeping heating.

In this manner, the pesticidal active ingredient-containing granule is coated with the thermosetting resin, and it is preferable that the proportion of the thermosetting resin is from 0.5 to 15 parts by weight based on 100 parts by weight of the pesticidal active ingredient-containing granule to be coated, generally in view of durability of effect of the resulting granular pesticidal composition.

Further, after the pesticidal active ingredient-containing granule is coated with the thermosetting resin, it is preferable to keep the coated granule at from 5 to 120°C for 3 to 120 minutes, preferably from 40 to 100°C for 5 to 30 minutes to cure the thermosetting resin completely.

In the present invention, respective objects can be attained by increasing the proportion of the thermosetting resin against the pesticidal active ingredient-containing granule in the case where controlled release of the pesticidal active ingredient for longer period is required, and by decreasing the proportion of the thermosetting resin against the pesticidal active ingredient-containing granule in the case where controlled release of the pesticidal active ingredient for longer period is not so required, to the contrary. In addition, extent of the controlled release can be controlled by appropriately selecting the kind of the thermosetting resin.

Namely, when crosslinking degree of the thermosetting resin is increased, for example, when a polyurethane resin is used, it is possible to accomplish controlled release of the pesticidal active ingredient for longer period by selecting polyisocyanate having tri- or higher isocyanate groups and/or polyol having tri- or higher hydroxy groups. In general, it is usually preferable to select a resin having low water absorption ratio (preferably not more than 5%) and high glass transition temperature in selecting a thermosetting resin having high crosslinking degree. Of course, it is also possible to attain controlled release of necessary extent by mixing two or more resins and appropriately selecting the mixing ratio.

The present invention is then more specifically described by production examples and test examples.

Production Example 1

Four parts by weight of N-(1,1,3-trimethyl-2-oxa-4-indanyl)-5-chloro-1,3-dimethylpyrazole-4-carboxamide [Furametpyr] and 0.8 parts by weight of hydrated silica was completely mixed in a juice mixer, and then, the mixture was ground by a pin mill. The resulting ground material has an average particle size of 19.1 μm (measured value by Coulter Counter TA II type).

The resulting ground material (4.8 parts by weight ) obtained above, 30 parts by weight of Bentonite Fuji (bentonite manufactured by Hojun Yoko K.K.), 2 parts by weight of Cellogen 7A (sodium carboxymethylcellulose manufactured by Dai-ichi Kogyo Seiyaku Co., Ltd.), 0.5 parts by weight of sodium hexametaphosphate and 60.7 parts by weight of kaolin clay were completely mixed by a juice mixer, and the mixture was transferred to a mortar, and to this were added 10 parts by weight of 20% by weight aqueous solution of sodium dodecylbenzenesulfonate and 12 parts by weight of water, and they were completely kneaded. The resulting kneaded material was granulated by a laboratory extruding granulator equipped with a 1.2 mm ø die plate, dried at 60°C for 15 minutes, then the particle size was made uniform, to obtain the pesticidal active ingredient-containing granule having a particle size from 1400 to 850 μm (This pesticidal active ingredient-containing granule is also comparative granular pesticidal composition used for comparison in the test examples described below.).

One kilogram of the resulting pesticidal active ingredient-containing granule was rolled at 20 to 30 rpm in an inclined pan type rolling granulator which could control temperature equipped with a hot air generator, and to this was added 5 g of a mixture obtained by mixing 46.5 parts by weight of a polymeric MDI (mixture having a polymerization degree of 1 to 3), 52.5 parts by weight of a trifunctional polypropylene glycol polyol and 1 part by weight of 2,4,6-tris (dimethylaminomethyl)phenol with maintaining the temperature at from 65 to 70°C, and the temperature of the mixture was kept at from 65 to 70°C for 4 minutes. The same operation that the mixture of the polymeric MDI, trifunctional polypropylene glycol polyol and 2,4,6-tris(dimethylaminomethyl)phenol was added and the resulting mixture was kept at from 65 to 70°C for 4 minutes was repeated 18 times, and finally, the resulting mixture was kept at from 65 to 70°C for 10 minutes to produce a granular pesticidal composition (1) of the present invention.

Production Example 2

A granular pesticidal composition (2) of the present invention was produced in the same manner as in Production Example 1 except that the operation that the mixture of the polymeric MDI, trifunctional polypropylene glycol polyol and 2,4,6-tris(dimethylaminomethyl)phenol was added and the resulting mixture was kept at from 65 to 70°C for 4 minutes was repeated 20 times instead of 18 times in the Production Example 1.

Test Example 1

Into a 500 ml beaker were charged the granular pesticidal compositions (1) and (2) obtained in Production Examples 1 and 2 and the comparative granular pesticidal composition (300 mg, respectively) and 300 ml of 3° hardness water, and the mixture was stirred mildly. The temperature of the solution was kept at 25±1°C, and after given time, 1ml of the solution took out from the center part of the beaker was analyzed by gas chromatography to measure the amount of the pesticidal active ingredient, and release ratio was calculated by the following formula.

$$\text{Release ratio (\%)} = \frac{\text{Amount of pesticidal active ingredient (mg) in 1 ml of sample} \times 300}{\text{Initial amount of pesticidal active ingredient (mg) in 300 mg of composition tested}} \times 100$$

Table 1

| | Release ratio (%) | | |
|---|---|---|---|
| | One day after | 21 days after | 42 days after |
| Granular pesticidal composition (1) | 23 | 69 | 91 |
| Granular pesticidal composition (2) | 16 | 48 | 64 |
| Comparative granular pesticidal composition | 100 | 100 | 100 |

As shown in the above table, as to the comparative granular pesticidal composition, the pesticidal active ingredient is quickly eluted, while, as to the granular pesticidal composition of the present invention, controlled release of the pesticidal active ingredient for long period is attained.

The granular pesticidal compositions (1) and (2) of the present invention containing as a pesticidal active ingredient Furametpyr which is a fungicidal compound are very effective for use for nersery box treatment of a rice plant by making the best use of the controlled release for a long time.

As is known from comparison between the granular pesticidal composition (1) of the present invention [the proportion of the thermosetting resin is about 9 parts by weight based on 100 parts by weight of the pesticidal active ingredient-containing granule to be coated] and the granular pesticidal composition (2) of the present invention [the proportion of the thermosetting resin is about 10 parts by weight based on 100 parts by weight of the pesticidal active ingredient-containing granule to be coated], the extent of controlled release of the pesticidal active ingredient is controlled by changing the using ratio of the thermosetting resin.

Examples in which the extent of controlled release of the pesticidal active ingredient is controlled by changing the kind of the thermosetting resin are shown below.

Production Example 3

First, a pesticidal active ingredient-containing granule having a particle size from 1400 to 850 µm was obtained in the same manner as in Production Example 1.

One kilogram of the resulting pesticidal active ingredient-containing granule was rolled at 20 to 30 rpm in an inclined pan type rolling granulator which could control temperature equipped with a hot air generator, and to this was added 5 g of a mixture obtained by mixing 135 parts by weight of a polymeric MDI (mixture having a polymerization degree of 1 to 3), 486 parts by weight of a trifunctional polypropylene glycol polyol and 12 part by weight of 2,4,6-tris (dimethylaminomethyl)phenol with maintaining the temperature at from 65 to 70°C, and the temperature of the mixture was kept at from 65 to 70°C for 4 minutes. The same operation that the mixture of the polymeric MDI, trifunctional polypropylene glycol polyol and 2,4,6-tris(dimethylaminomethyl)phenol was added and the resulting mixture was kept at from 65 to 70°C for 4 minutes was repeated 20 times, and finally, the resulting mixture was kept at from 65 to 70°C for 10 minutes to produce a granular pesticidal composition (3) of the present invention.

Production Example 4

First, a pesticidal active ingredient-containing granule having a particle size from 1400 to 850 µm was obtained in the same manner as in Production Example 1.

One kilogram of the resulting pesticidal active ingredient-containing granule was rolled at 20 to 30 rpm in an inclined pan type rolling granulator which could control temperature equipped with a hot air generator, and to this was added 5 g of a mixture obtained by mixing 45.2 parts by weight of a polymeric MDI (mixture having a polymerization degree of 1 to 3), 18.3 parts by weight of a trifunctional polypropylene glycol polyol, 36.6 parts by weight of a difunctional polypropylene glycol polyol and 2.0 parts by weight of 2,4,6-tris(dimethylaminomethyl)phenol with maintaining the temperature at from 65 to 70°C, and the temperature of the mixture was kept at from 65 to 70°C for 4 minutes. The same operation that the mixture of the polymeric MDI, trifunctional polypropylen glycol polyol, difunctional polypropylene glycol polyol and 2,4,6-tris(dimethylaminomethyl)phenol was added and the resulting mixture was kept at from 65 to 70°C for 4 minutes was repeated 20 times, and finally, the resulting mixture was kept at from 65 to 70°C for 10 minutes to produce a granular pesticidal composition (4) of the present invention.

Production Example 5

First, a pesticidal active ingredient-containing granule having a particle size from 1400 to 850 µm was obtained in the same manner as in Production Example 1.

One kilogram of the resulting pesticidal active ingredient-containing granule was rolled at 20 to 30 rpm in an inclined pan type rolling granulator which could control temperature equipped with a hot air generator, and to this was added 5 g of a mixture obtained by mixing 35.8 parts by weight of a polymeric MDI (mixture having a polymerization degree of 1 to 3), 31.1 parts by weight of a trifunctional polypropylene glycol polyol, 31.1 parts by weight of a difunctional polypropylene glycol polyol and 1.5 part by weight of 2,4,6-tris(dimethylaminomethyl)phenol with maintaining the temperature at from 65 to 70°C, and the temperature of the mixture was kept at from 65 to 70°C for 4 minutes. The same operation that the mixture of the polymeric MDI, trifunctional polypropylene glycol polyol, difunctional polypropylene glycol polyol and 2,4,6-tris(dimethylaminomethyl)phenol was added and the resulting mixture was kept at from 65 to 70°C for 4 minutes was repeated 20 times, and finally, the resulting mixture was kept at from 65 to 70°C for 10 minutes to produce a granular pesticidal composition (5) of the present invention.

Production Example 6

First, a pesticidal active ingredient-containing granule having a particle size from 1400 to 850 μm was obtained in the same manner as in Production Example 1.

One kilogram of the resulting pesticidal active ingredient-containing granule was rolled at 20 to 30 rpm in an inclined pan type rolling granulator which could control temperature equipped with a hot air generator, and to this was added 5 g of a mixture obtained by mixing 40.9 parts by weight of a polymeric MDI (mixture having a polymerization degree of 1 to 3), 39.4 parts by weight of a trifunctional polypropylene glycol polyol, 19.7 parts by weight of a difunctional polypropylene glycol polyol and 1.5 parts by weight of 2,4,6-tris(dimethylaminomethyl)phenol with maintaining the temperature at from 65 to 70°C, and the temperature of the mixture was kept at from 65 to 70°C for 4 minutes. The same operation that the mixture of the polymeric MDI, trifunctional polypropylene glycol polyol, difunctional polypropylene glycol polyol and 2,4,6-tris(dimethylaminomethyl)phenol was added and the resulting mixture was kept at from 65 to 70°C for 4 minutes was repeated 20 times, and finally, the resulting mixture was kept at from 65 to 70°C for 10 minutes to produce a granular pesticidal composition (6) of the present invention.

Production Example 7

First, a pesticidal active ingredient-containing granule having a particle size from 1400 to 850 μm was obtained in the same manner as in Production Example 1.

One kilogram of the resulting pesticidal active ingredient-containing granule was rolled at 20 to 30 rpm in an inclined pan type rolling granulator which could control temperature equipped with a hot air generator, and to this was added 5 g of a mixture obtained by mixing 135 parts by weight of a polymeric MDI (mixture having a polymerization degree of 1 to 3), 148 parts by weight of a trifunctional polypropylene glycol polyol and 2.8 parts by weight of 2,4,6-tris(dimethylaminomethyl)phenol with maintaining the temperature at from 65 to 70°C, and the temperature of the mixture was kept at from 65 to 70°C for 4 minutes. The same operation that the mixture of the polymeric MDI, trifunctional polypropylene glycol polyol and 2,4,6-tris(dimethylaminomethyl)phenol was added and the resulting mixture was kept at from 65 to 70°C for 4 minutes was repeated 20 times, and finally, the resulting mixture was kept at from 65 to 70°C for 10 minutes to produce a granular pesticidal composition (7) of the present invention.

Test Example 2

Into a 500 ml beaker were charged the granular pesticidal compositions obtained in Production Examples 3 to 7 (300 mg, respectively) and 300 ml of 3° hardness water, and the mixture was stirred mildly. The temperature of the solution was kept at 25±1°C, and after given time, 1ml of the solution took out from the center part of the beaker was analyzed by gas chromatography to measure the amount of the pesticidal active ingredient therein, and release ratio was calculated appropriately by the following formula.

$$\text{Release ratio (\%)} = \frac{\text{Amount of pesticidal active ingredient (mg) in 1 ml of sample} \times 300}{\text{Initial amount of pesticidal active ingredient (mg) in 300 mg of composition tested}} \times 100$$

And, number of days required for 50% release of the pesticidal active ingredient was calculated by interpolation method. The results are shown in Table 2.

In the table, polyol equivalent (OH equivalent) of the thermosetting resin used for coating, Tg (value read from peak of dissipation elasticity modulus obtained in viscoelasticity measurement) and water absorption ratio (%) after kept in boiling water for 24 hours are also described.

Table 2

| | Number of days for 50% release (day) | OH equivalent | Tg (°C) | Water absorption ratio |
|---|---|---|---|---|
| Granular pesticidal composition (3) | 3 | 486 | -24 | 6.19 |
| Granular pesticidal composition (4) | 5 | 279 | 15 | 3.64 |
| Granular pesticidal composition (5) | 9 | 230 | 28 | 3.32 |
| Granular pesticidal composition (6) | 14 | 196 | 57 | 2.97 |
| Granular pesticidal composition (7) | 25 | 148 | 73 | 2.17 |

As shown in the above table, extent of controlled release tends to increase when OH equivalent of a thermosetting resin becomes lower (water absorption ratio becomes lower), and therefore, controlled release of the pesticidal active ingredient corresponding to the object can be conducted by appropriately changing the kind and amount of a thermosetting resin depending on use occasion.

Effect of the Invention

According to the present invention, release of the pesticidal active ingredient can be controlled, and controlled release of the pesticidal active ingredient can be accomplished.

Claims

1.  A manufacturing method for a granular pesticidal composition coated with a polyurethane resin, comprising repeating the operation that a mixture containing 0.05 to 1.5 parts by weight of (1) a combination of polyisocyanate having tri- or higher isocyanate groups and polyol, (2) a combination of polyisocyanate and polyol having tri- or higher hydroxy groups, or (3) a combination of polyisocyanate having tri- or higher isocyanate groups and polyol having tri- or higher hydroxy groups for preparing the polyurethane resin, is added to 100 parts by weight of the pesticidal active ingredient-containing granule to be coated in one time.

2.  A granular pesticidal composition obtainable by the method according to claim 1.

3.  A granular pesticidal composition according to claim 2, wherein the proportion of the polyurethane resin is from 0.5 to 15 parts by weight based on 100 parts by weight of the pesticidal active ingredient-containing granule to be coated.

4.  A granular pesticidal composition according to claim 2 or 3, wherein the water absorption ratio of the polyurethane resin is not more than 5%.

Patentansprüche

1.  Verfahren zur Herstellung einer gekörnten Pestizidzusammensetzung, welche mit einem Polyurethanharz beschichtet ist, umfassend das Wiederholen des Vorgangs, in dem ein Gemisch, enthaltend 0,05 bis 1,5 Gewichtsteile von (1) einer Kombination von einem Polyisocyanat, umfassend Tri- oder höhere Isocyanatgruppen und einem Polyol, (2) einer Kombination von einem Polyisocyanat und einem Polyol, umfassend Tri- oder höhere Hydroxygruppen, oder (3) einer Kombination von einem Polyisocyanat umfassend Tri- oder höhere Isocyanatgruppen und einem Polyol umfassend Tri- oder höhere Hydroxygruppen zur Herstellung von Polyurethanharz, zu 100 Gewichtsteilen des pestiziden wirkstoffhaltigen Granulats, welches in einem Mal beschichtet werden soll, gegeben wird.

**2.** Gekörnte Pestizidzusammensetzung, erhältlich durch das Verfahren gemäß Anspruch 1.

**3.** Gekörnte Pestizidzusammensetzung gemäß Anspruch 2, wobei das Verhältnis des Polyurethanharzes 0,5 bis 15 Gewichtsteile, bezogen auf 100 Gewichtsteile des zu beschichtenden pestiziden wirkstoffhaltigen Granulats, beträgt.

**4.** Gekörnte Pestizidzusammensetzung gemäß Anspruch 2 oder 3, wobei das Wasserabsorptionsverhältnis des Polyurethanharzes nicht mehr als 5% beträgt.

**Revendications**

**1.** Méthode de fabrication d'une composition pesticide granulaire enrobée d'une résine de polyuréthane, comprenant la répétition de l'opération consistant à ajouter, en une fois, à 100 parties en poids de la granule contenant ingrédient pesticide actif qu'il s'agit d'enrober, un mélange contenant 0,05 à 1,5 partie en poids de (1) une combinaison de polyisocyanate possédant des groupements triisocyanates ou supérieurs et de polyol, (2) une combinaison de polyisocyanate et de polyol possédant des groupements trihydroxy ou supérieurs, ou (3) une combinaison de polyisocyanate possédant des groupements triisocyanates ou supérieurs et de polyol possédant des groupements trihydroxy ou supérieurs pour préparer la résine polyuréthane.

**2.** Composition pesticide granulaire pouvant être obtenue par le procédé suivant la revendication 1.

**3.** Composition pesticide granulaire suivant la revendication 2, dans laquelle on proportionne la résine polyuréthane à 0,5 à 15 parties en poids en se basant sur 100 parties en poids de la granule contenant l'ingrédient pesticide actif qu'il s'agit d'enrober.

**4.** Composition pesticide granulaire suivant la revendication 2 ou 3, dans laquelle le taux d'absorption d'eau de la résine polyuréthane n'excède pas 5 %.